# DEMANDE DE BREVET EUROPEEN

(11) **EP 4 345 686 A1**
(43) Date de publication de la demande: **03.04.2024**
(21) Numéro de dépôt: 23199952.5
(22) Date de dépôt: 27.09.2023
(51) Int. Cl.: G06N 3/042, G06N 3/043, G06N 3/09, G06N 5/045

(54) **PROCÉDÉ DE GÉNÉRATION AUTOMATIQUE D'UN ALGORITHME D'AIDE À UNE PRISE DE DÉCISION ; PRODUIT PROGRAMME D'ORDINATEUR ET DISPOSITIF INFORMATIQUE ASSOCIÉS**

(30) Priorité: 27.09.2022 FR 2209773
(71) Demandeur: THALES, 92190 Meudon (FR)
(72) Inventeur: LEDUC, Thomak, 33700 MERIGNAC (FR); DIAZ PINEDA, Jaime, 33700 MERIGNAC (FR); ANDRICQUE, Maelle, 33700 MERIGNAC (FR)
(74) Mandataire: Lavoix

(57) **Abrégé**

Ce procédé (100) comporte les étapes de : fournir (110) des règles logiques associant chacune une connaissance à une ou données physiques ; analyser (120) les règles logiques fournies pour extraire un ensemble de connaissances et un ensemble de données physiques ; élaborer (130) un réseau de tenseurs logiques comportant un réseaux de neurones pour chaque connaissance et un réseau de neurones pour chaque donnée physique, un réseau de neurones calculant une pertinence de la connaissance ou de la donnée physique associée à partir d'une situation courante, définie par les valeurs courantes des données physiques ; entraîner (140) le réseau sur une base de données d'apprentissage ; et exécuter (150) l'algorithme d'aide à une prise de décision résultant de la phase d'apprentissage sur une nouvelle situation pour calculer les pertinences de chaque connaissance et de chaque donnée physique vis-à-vis de cette nouvelle situation.

## Description

La présente invention a pour domaine celui de l'aide à la prise de décision des opérateurs dans des environnements complexes et dynamiques, notamment l'aide à la prise de décision des pilotes d'aéronefs, civils ou militaires.

Pour la prise de décision dans un environnement complexe et dynamiques, l'opérateur doit, sous contrainte temporelle forte, gérer une grande quantité de données de description de l'environnement, dont une partie seulement est pertinente pour prendre une décision adaptée à la situation particulière rencontrée à l'instant courant.

La prise d'une décision adaptée dépend alors de la conscience de situation que se fait le pilote de l'environnement.

On peut définir la conscience de situation comme un mécanisme cognitif à trois niveaux : (1) la perception des éléments de l'environnement, (2) la compréhension de leur signification et finalement (3) la projection de l'état futur des éléments significatifs.

Ce modèle souligne la manière dont le pilote capture les données de description de l'environnement et les analyse afin de prendre des décisions. Ce modèle s'applique bien au cas des pilotes sur des vols commerciaux, cas d'usage où ce modèle a fait l'objet de nombreuses validations.

Cependant, alors qu'il est concentré sur la mission à réaliser, le pilote peut être conduit à ne pas considérer une donnée car elle n'est pas significative pour la mission à réaliser, alors qu'elle l'est pour la situation courante. Plus généralement, pour faire face à une situation, à cause de facteurs comme la charge de travail, le stress, ou tout simplement la distraction ou la fatigue, le pilote peut ignorer ou oublier des informations qui lui auraient permis d'avoir une meilleure conscience de situation.

Il est clair que le fait de ne pas prendre en compte certaines données de l'environnement dans les premières étapes du modèle peut conduire à une conscience erronée de la situation et donc à une prise d'une décision inadaptée.

Dans certaines phases opérationnelles, un opérateur émetteur, comme le pilote, est amené à partager des données de description de l'environnement avec un opérateur récepteur, comme le co-pilote (ou le contrôleur de navigation aérienne). Ces communications contraignent la quantité d'information à partager. L'opérateur émetteur ne partage pas toutes les données de description de l'environnement avec l'autre opérateur, mais choisit de partager certaines données qu'il sait constituer une base partagée pour la conscience de situation commune. Or l'opérateur émetteur peut surcharger l'information communiquée en ajoutant des informations inutiles, en raison d'un manque de filtrage de sa part des informations disponibles.

Il existe donc un problème lié à la capacité de l'opérateur de maitriser l'information pertinente vis-à-vis de la situation particulière rencontrée.

Pour garantir la performance de la prise de décision dans un environnement complexe et dynamique, il faut assurer la disponibilité des connaissances pertinentes sans pour autant surcharger les pilotes avec des informations qui ne sont pas nécessaires.

Il est nécessaire de réduire la quantité des informations provenant de l'environnement en décrivant et évaluant la pertinence de ces informations à travers un dispositif d'aide à la décision.

Cependant, la survenue d'une situation demande des prises de décisions rapides. C'est pour cette raison que les systèmes d'aide à la décision doivent optimiser leurs calculs et fournir en temps réel au pilote les informations pertinentes pour sa compréhension de la situation et sa prise de décision.

Le but de la présente invention est de résoudre ce problème.

Pour cela l'invention a pour objet un procédé de génération automatique d'un algorithme d'aide à une prise de décision par un opérateur dans un environnement complexe et dynamique, caractérisé en ce que le procédé comporte les étapes de : fournir une base de connaissances comportant une pluralité de règles logiques, une règle logique étant une fonction logique associant une connaissance à une ou plusieurs variables d'entrée, une variable d'entrée étant une donnée physique et/ou une connaissance intermédiaire ; analyser la base de connaissances pour extraire un ensemble de connaissances et un ensemble de données physiques ; élaborer un algorithme du type réseau de tenseurs logiques comportant un réseaux de neurones pour chaque connaissance de l'ensemble de connaissances et un réseau de neurones pour chaque donnée physique de l'ensemble de données physiques, un réseau de neurones calculant une pertinence de la connaissance ou de la donnée physique associée à partir d'une situation courante, la situation courante étant définie par les valeurs courantes de chacune des données physiques de l'ensemble de données physiques ; entrainer l'algorithme du type réseau de tenseurs logiques sur une base de données d'apprentissage comportant des situations annotées avec la pertinence vraie de chaque connaissance et de chaque donnée physique, pour obtenir l'algorithme d'aide à une prise de décision ; et, exécuter l'algorithme d'aide à une prise de décision sur une nouvelle situation pour calculer les pertinences de chaque connaissance et de chaque donnée physique vis-à-vis de la nouvelle situation.

Suivant des modes particuliers de réalisation, le procédé comporte une ou plusieurs des caractéristiques suivantes, prises isolément ou suivant toutes les combinaisons techniquement possibles :
- analyser la base de connaissances permet d'extraire, pour chaque connaissance de l'ensemble de connaissances, un ensemble de causes de ladite connaissance, qui est constitué des données physiques qui sont les causes directes ou indirectes de ladite connaissance, et dans lequel l'entrainement de l'algorithme du type réseau de tenseurs logiques s'effectue en mettant en oeuvre une contrainte fondée sur l'ensemble des causes de chaque connaissance.
- l'entrainement de l'algorithme du type réseau de tenseurs logiques s'effectue en minimisant une valeur de vérité globale résultant d'une agrégation d'une pluralité de valeurs de vérité élémentaires, la pluralité de valeurs de vérité élémentaires comporte : au moins la pertinence d'une donnée physique pour toute situation s telle que ladite donnée physique est annotée comme pertinente ; au moins la pertinence d'une donnée physique pour toute situation telle que ladite donnée physique est annotée comme n'étant pas pertinente ; et, pour chaque connaissance, au moins une différence entre la pertinence de ladite connaissance et la disjonction logique des pertinences de toutes les causes de ladite connaissance.
- l'environnement est celui d'un aéronef et l'opérateur le pilote dudit aéronef.
- suite à l'exécution de l'algorithme d'aide à une prise de décision sur la nouvelle situation, le procédé comporte une étape consistant à présenter à l'opérateur une liste de connaissances et/ou de données filtrée et/ou ordonnées en fonction de leurs pertinences respectives.

L'invention a également pour objet un produit programme d'ordinateur comportant des instructions logicielles qui, lorsqu'elles sont exécutées par un dispositif informatique, mettent en oeuvre l'algorithme d'aide à une prise de décision résultant de la mise en oeuvre du procédé précédent.

L'invention a également pour objet un dispositif configuré de manière à exécuter l'algorithme d'aide à une prise de décision résultant de la mise en oeuvre du procédé précédent.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
La figure 1 est une représentation sous forme de blocs d'un mode de réalisation du procédé d'identification selon l'invention ; et,
La figure 2 est une représentation schématique du système pour la mise en oeuvre du procédé d'identification selon l'invention.

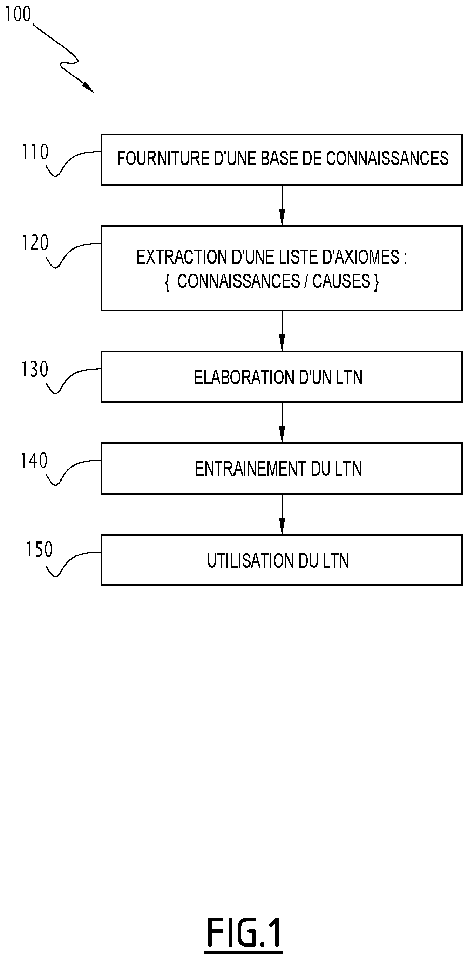

La figure 1 illustre un mode de réalisation préféré d'un procédé 100 d'élaboration d'un algorithme d'aide à une prise de décision par un opérateur dans un environnement complexe et dynamique.

Ce procédé est exécuté sur un ordinateur convenablement programmé.

L'algorithme élaboré est fondé sur une architecture neuro-symbolique, réunissant l'aspect sémantique de l'intelligence artificielle symbolique et les performances des réseaux de neurones.

Dans une étape 110, une base de connaissances est fournie. Il s'agit, dans l'exemple du présent mode de réalisation, d'une base de connaissances météorologiques.

La base de connaissances est par exemple une base préparée par des experts, ici météorologues et pilotes d'avions.

Elle peut prendre différentes formes. Il s'agit par exemple d'un fichier texte. En variante, il s'agit d'une ontologie, c'est-à-dire un ensemble structuré de concepts et de relations entre concepts, qui offre une modélisation d'un champ de connaissances, en l'occurrence le champ météorologique.

La base de connaissances comporte des règles logiques. Ce sont des règles empiriques définies par les experts du domaine.

Une règle est une fonction logique prenant en entrée les valeurs courantes d'un jeu de variables d'entrée et délivrant en sortie la valeur de vérité d'une connaissance.

Le jeu de variables d'entrée comporte une ou plusieurs données physiques et/ou une ou plusieurs connaissances intermédiaires.

Une donnée physique d est une grandeur dont une valeur instantanée est mesurée par un système, embarqué à bord de l'aéronef ou distant.

L'ensemble S des données physiques d mesurées permet de décrire l'environnement.

Une situation s est constituée par les valeurs instantanées des données physiques de l'ensemble S.

Une connaissance k est un élément d'interprétation permettant d'avoir une représentation abstraite de l'environnement. Une connaissance a une dimension sémantique. La sémantique permet de donner une signification à un signe (comme un mot) en fonction du contexte.

L'ensemble K des connaissances k permet une représentation objective de haut niveau de l'environnement. Plus précisément, les valeurs de vérité instantanées de toutes les connaissances k de l'ensemble K constituent une représentation objective de la situation. Ceci à la différence de la conscience de situation, qui concerne l'interprétation qu'un opérateur peut se fait de la situation, c'est-à-dire une représentation subjective de la situation.

Par exemple, la base de connaissances mémorise un premier ensemble de règles relatives à la connaissance « Givrage ». Ce premier ensemble comporte par exemple la règle :
« Temp_air < 0°C => Givrage »

Ainsi, le fait que la valeur à l'instant courant de la données physique « température de l'air », Temp_air, soit effectivement inférieure à 0°C, conduit à la connaissance d'un risque de givrage (c'est-à-dire que la valeur de vérité courante de la connaissance « Givrage » prend la valeur unité).

La base de connaissances mémorise un second ensemble de règles relatives à la connaissance « Chaleur ». Ce second ensemble comporte par exemple la règle :
« Temp_air > 20°C => Chaleur »

Ainsi, le fait que la valeur à l'instant courant de la la données physique « température de l'air », Temp_air, soit effectivement supérieure à 20°C, conduit à la connaissance qu'il fait chaud (c'est-à-dire que la valeur de vérité courante de la connaissance « Chaleur » prend la valeur unité).

La base de connaissances mémorise un troisième ensemble de règles relatives à la connaissance « Vent ». Ce troisième ensemble de règles comporte par exemple les règles :
« Wind_speed > 30 kn => Vent »

Ainsi le fait que la valeur à l'instant courant de la donnée physique « vitesse du vent », Wind_ speed, soit effectivement supérieure à 30 kn, conduit à la connaissance qu'il y a du vent (c'est-à-dire que la valeur de vérité courante de la connaissance « Vent » prend la valeur unité).
«Wind_speed > 10 kn AND Wind_direction > 220°
AND Wind_direction < 320° => Vent »

Ainsi le fait qu'à l'instant courant la valeur de la donnée physique « vitesse du vent », Wind_speed, soit supérieure à 10 kn et que la valeur de la donnée physique « direction du vent », Wind_direction, soit entre 220° et 320° (par rapport à la direction longitudinale de l'aéronef) conduit à la connaissance qu'il y a du vent (c'est-à-dire que la valeur de vérité de la connaissance « Vent » prend la valeur unité).

«Wind_speed < 10 kn AND Wind_speed_gust < 10 kn => NOT Vent»

Ainsi le fait que la valeur courante de la donnée physique « vitesse du vent », Wind_speed, soit inférieure à 10 kn et que la valeur courante de la donnée physique « vitesse des rafales de vent », Wind_speed_gust, soit inférieure à 10 kn conduit à la connaissance qu'il n'y a pas de vent (c'est-à-dire que la valeur de vérité de la connaissance « NOT Vent » prend la valeur unité, ou encore que la valeur de vérité de la connaissance « Vent » prend la valeur nulle).
« Chaleur => Vent »

Ainsi, la connaissance du fait qu'il fait chaud (la valeur de vérité courante de la connaissance intermédiaire « Chaleur » prenant la valeur unité) conduit à la connaissance qu'il y a du vent (c'est-à-dire que la valeur de vérité courante de la connaissance « Vent » prend la valeur unité).

Dans une étape 120, la base de connaissances est analysée pour déterminer l'ensemble K des connaissances, l'ensemble S des données physiques de description de l'environnement, et, avantageusement, pour chaque connaissance k de l'ensemble K, l'ensemble Sk des données physiques (ou causes) qui impactent la connaissance k, directement ou indirectement au travers d'une ou plusieurs connaissances intermédiaires.

L'ensemble Sk des causes de la connaissance k est un sous-ensemble de l'ensemble S.

Par exemple, pour les trois ensembles précédents de règles, le résultat de cette étape d'analyse est résumé par le tableau suivant :

| Connaissance | Cause(s) |
|---|---|
| Givrage | Temp_air |
| Chaleur | Temp_air |
| Vent | Wind_speed |
| | Wind_direction |
| | Wind_speed_gust |
| | Temp_air |

Ainsi pour cet exemple, l'ensemble K des connaissances k est constitué des connaissances « Givrage », « Chaleur » et « Vent ».

Ainsi, l'ensemble S des données physiques d est constitué des données « Wind_speed », « Wind_direction », « Wind_speed_gust » et « Temp_air ».

L'ensemble des causes associées à la connaissance « Givrage » comporte la donnée physique « Temp_air », l'ensemble des causes associées à la connaissance « Chaleur » comporte la donnée physique « Temp_air », et l'ensemble des causes associées à la connaissance « Vent » comporte les données physiques « Wind_speed », « Wind_direction », « Wind_speed_gust » et « Temp_air ».

Ainsi la donnée physique de température de l'air, Temp_air, est une cause de la connaissance « Givrage », mais également de la connaissance « Chaleur » et de la connaissance « Vent ».

L'étape 130 suivante est une étape d'encodage permettant de construire l'architecture d'un algorithme LTN.

On note *Pₖ*(*s*) la pertinence de la connaissance k vis-à-vis de la situation s (c'est-à-dire des valeurs courantes des données physiques de l'ensemble S).

La pertinence est une variable entre 0 et 1. Lorsque la pertinence *Pₖ*(*s*) est proche de l'unité, les valeurs courantes des données physiques de l'ensemble S sont telles que la pertinence de la connaissance k est acquise. Lorsque la pertinence *Pₖ*(*s*) est proche de zéro, les valeurs courantes des variables physiques de l'ensemble S sont telles que la pertinence de la connaissance k n'est pas acquise.

Dans le cas d'usage courant, la valeur de vérité de la connaissance k et la valeur de la pertinence de la connaissance k sont très similaires, mais ce n'est pas nécessairement le cas. Par exemple, on considère qu'une valeur de vérité égale à 1 pour la connaissance « Chaleur » dénote qu'il fait très chaud et une valeur de vérité égale à 0 dénote qu'il fait très froid. On considère la connaissance « Chaleur » comme pertinente lorsque sa valeur de vérité approche l'une ou l'autre de ses extrêmes (0 ou 1). La connaissance « Chaleur » est alors très pertinente (valeur de pertinence proche de 1) quand sa valeur de vérité est proche de 0.

De manière similaire, on note *P_{d}*(*s*) la pertinence de la donnée physique d vis-à-vis de la situation s.

Un algorithme LTN est un algorithme de la famille des réseaux de tenseurs logiques ou « Logic Tensor Networks » - LTN.

L'algorithme LTN est implémenté par exemple en utilisant le logiciel libre « Tensorflow » (marque déposée) et son interface « Python » (marque déposée).

De manière générale, un algorithme LTN est basé sur une logique dérivée de la logique de premier ordre et de la logique floue. Il permet de convertir une fonction logique en un objet dénommé graphe calculatoire (« computational graph ») dans le logiciel « Tensorflow ». La fonction est décomposée en prédicats élémentaires et les principes suivants sont appliqués :
- les constantes et les variables sont représentées par des tenseurs ;
- les prédicats élémentaires associant ces constantes et ces variables sont représentés par une fonction pouvant être un réseau de neurones ; et,
- les opérateurs logiques entre prédicats élémentaires sont représentés par des opérateurs de logique floue.

Dans le présent procédé, l'algorithme LTN est construit de manière à associer un réseau de neurones à chaque connaissance k de l'ensemble K et un réseau de neurones à chaque donnée physique d de l'ensemble S.

Le réseau de neurones associé à la connaissance k permet d'approximer la pertinence *Pₖ*(*s*)*.* Ce réseau de neurones prend donc en entrée la situation s et délivre en sortie la pertinence de la connaissance k vis-à-vis de la situation s.

Le réseau de neurones associé à la donnée physique d permet d'approximer la pertinence *P_{d}*(*s*). Il prend donc en entrée la situation s et délivre en sortie la pertinence de la donnée d vis-à-vis de la situation s.

L'entrée d'un réseau de neurones est un tenseur dont les coordonnées sont les valeurs courantes des données de l'ensemble S.

Dans l'exemple ci-dessus, l'ensemble S étant constitué des données « Wind_speed », « Wind_direction », « Wind_speed_gust » et « Temp_air », le tenseur d'entrée (30, 90, 30, 5) correspond à la situation s dans laquelle :
- la vitesse du vent est égale à 30 kn
- la direction du vent fait un angle de 90°
- la vitesse des rafales est de 35 kn
- la température de l'air est égale à 5°C.

Dans une étape 140, l'algorithme LTN est convenablement paramétré par la mise en oeuvre d'une phase d'entrainement.

L'entrainement utilise des lots de situations labellisées, c'est-à-dire des situations s annotées avec la valeur vraie de la pertinence des différentes connaissances k de l'ensemble K et la valeur vraie de la pertinence des différentes données d de l'ensemble S. Une base de données d'apprentissage est utilisée, qui comporte les situations labellisées. Cette base est par exemple développée à partir de situations réelles annotées par des experts.

L'entrainement permet d'ajuster les paramètres des différents réseaux de neurones de l'algorithme LTN afin que les pertinences estimées par chacun de ces réseaux de neurones soient en adéquation avec les annotations.

De préférence, l'entrainement consiste, à maximiser une valeur de vérité globale résultant de l'agrégation d'une pluralité de valeurs de vérité élémentaires. L'agrégation est par exemple le produit des valeurs de vérité élémentaires.

La pluralité de valeurs de vérité élémentaires comporte :
- la valeur de vérité égale à *P_{d}*(*s*) pour toute situation s telle que la donnée physique d est annotée comme pertinente ;
- la valeur de vérité égale à *Not P_{d}*(*s*) pour toute situation s telle que la donnée physique d est annotée comme n'étant pas pertinente ; et, avantageusement ; et,
- pour chaque connaissance k de l'ensemble K, la valeur de vérité égale à 1 - *Pₖ*(*s*) + U*_{d ∈ S^{k}}P_{d}*(*s*), qui traduit l'axiome *Pₖ*(*s*) ⇔ U*_{d ∈ S^{k}}P_{d}*(*s*)*,* où « U » est l'opérateur logique de disjonction qui est appliqué sur toutes les données physiques d de l'ensemble Sₖ des causes de la connaissance k (déterminé à l'étape 120). Cet axiome traduit le fait que la pertinence de la connaissance k pour une situation s est équivalente à la combinaison des pertinences pour la situation s de chacune des causes d de la connaissance k.

L'homme du métier constatera que l'apport des règles logiques dans l'apprentissage s'effectue au travers des contraintes que formulent ces valeurs de vérité élémentaires. En variante, d'autres contraintes (alternatives aux contraintes précédentes ou additionnelles aux contraintes précédentes) pourraient être élaborées à partir des pertinences des données et/ou des connaissances.

A chaque pas d'entraînement de l'algorithme LTN, la valeur de vérité globale est calculée pour une situation s annotée. On utilise de préférence une descente de gradient classique avec une fonction de coût égale à l'unité moins la valeur de vérité globale.

Parmi l'ensemble S des données d, ce seront principalement les données d de l'ensemble Sk des causes de la connaissance k qui influeront sur le résultat du calcul de la pertinence de la connaissance k, mais il est possible que l'entrainement « découvre » de nouvelles corrélations entre données et connaissance, c'est-à-dire des corrélations qui n'étaient pas présentent dans la base de connaissances fournie initialement. Il est envisageable d'enrichir la base de connaissances initiale avec de nouvelles règles traduisant cette nouvelle corrélation.

L'algorithme LTN une fois entrainé n'est autre que l'algorithme d'aide à une prise de décision qu'il est possible d'utiliser, dans une étape 150, pour raisonner sur de nouvelles situations.

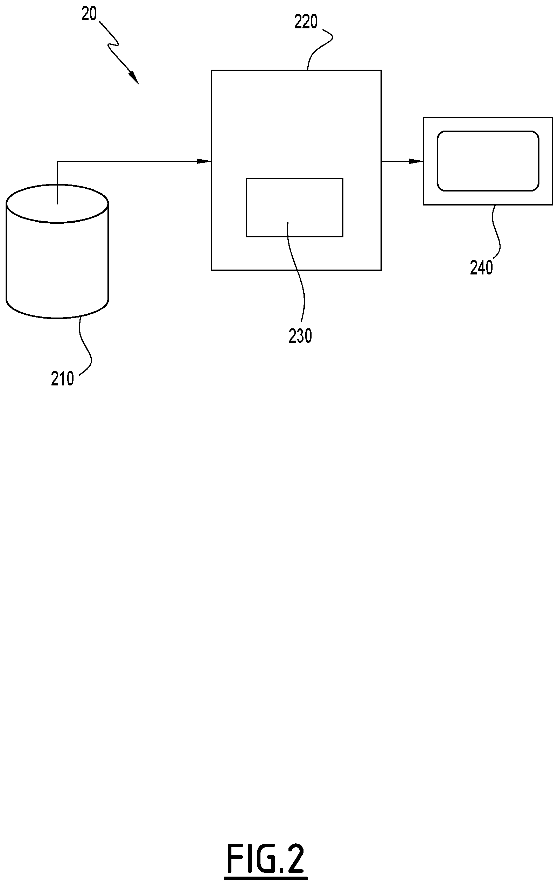

L'algorithme est téléchargé sur un dispositif informatique d'aide à la prise de décision embarqué à bord de l'aéronef. Ceci est illustré par le dispositif 200 de la figure 2, qui est propre à exécuter l'algorithme 230. Le dispositif est connecté à des capteurs ou systèmes (référencés de manière générale par le chiffre 210 sur la figure 2) permettant l'acquisition des valeurs instantanées des données physiques constituant les entrées de l'algorithme.

Pour une situation donnée, l'algorithme d'aide à une prise de décision calcule la pertinence de chaque connaissance k en exécutant le réseau de neurones correspondant et la pertinence de chaque données physique d en exécutant le réseau de neurones correspondant.

Le fait de pouvoir obtenir la pertinence de chaque donnée physique permet une meilleure explicabilité des résultats sur les connaissances. En effet, on peut ainsi déterminer quelle donnée physique a influencé le résultat, par exemple la peritnence de la connaissance k.

Par exemple, en considérant la connaissance « Vent » et ses causes « Vitesse du vent », « Direction du vent », « Vitesse des rafales », et « température de l'air » après entrainement, on peut obtenir la pertinence de chacune de ces cinq informations.

La pertinence de chaque donnée physique permet de déterminer quelle(s) donnée(s) physiques ont effectivement influencé la pertinence de la connaissance vent.

Par exemple :
- la pertinence du vent est élevée et la pertinence de chacune des quatre données physiques est élevée, alors chacune des quatre données a influencé le résultat de manière similaire ;
- la pertinence du vent est faible et la pertinence de chacune des quatre données physiques est faible, alors chacune des quatre données a influencé le résultat de manière similaire ;
- la pertinence du vent est élevée et la pertinence d'une des données physiques est élevée, les autres restant faibles, alors cette donnée physique a influencé le résultat plus fortement que les autres.

Il est théoriquement impossible que la pertinence d'une cause soit forte et celle de la connaissance faible. L'utilisation de l'opérateur logique de disjonction implique cette propriété.

Les sorties de l'algorithme d'aide peuvent être utilisées de différentes façons. Par exemple, les connaissances dont la pertinence est supérieure à un seuil, sont affichées sur un écran 240 du dispositif informatique 200 d'aide à une prise de décision. De la sorte, le pilote est informé des connaissances associées à la situation courante. Il a par conséquent une représentation objective de la situation.

En variante, sont affichées les données physiques dont la pertinence est supérieure à un seuil. L'attention du pilote est alors attirée sur ces informations significatives vis-à-vis de la situation courante. C'est alors au pilote d'élaborer sa propre représentation de la situation, mais à partir d'une information filtrée de manière objective. Cela permet d'alléger la charge cognitive du pilote. Cela permet de réduire la quantité d'information que l'opérateur a à prendre en compte en ne restituant à chaque instant que les informations que l'on sait être utiles (c'est-à-dire les données physiques influençant les connaissances pertinentes vis-à-vis de la situation rencontrée).

Alternativement, les données physiques sont ordonnées en fonction de leur pertinence courante de manière à présenter au pilote d'abord les données qui ont le plus d'influence sur la compréhension de la situation courante ou qui sont à partager avec les autres membres de l'équipage pour l'élaboration d'une conscience de situation commune.

La présente solution permet de répondre aux contraintes de temps d'exécution. Elle est donc compatible du temps réel. En effet, l'architecture sur laquelle elle est fondée présente les avantages suivants :
- par rapport aux systèmes par apprentissage profond (« deep learning »), elle nécessite moins de données d'entrainement, tout en offrant une meilleure généralisation, une interprétabilité et une explicabilité des résultats.
- par rapport aux systèmes d'intelligence artificielle symboliques, elle est d'exécution plus rapide, avec la possibilité de travailler avec des bases de connaissances erronées ou incomplètes et d'extraire de nouvelles connaissances.

De plus, après l'entrainement, seuls les réseaux de neurones entrainés doivent être embarqués. Les ressources nécessaires sont donc faibles, tant en termes de mémoire de stockage, que de capacité de calcul ou de temps d'exécution. Cela permet de respecter à la fois les contraintes d'embarquabilité et de temps réel.

La solution proposée présente de bons résultats même avec une base d'entrainement réduite. En effet, des résultats probants ont été obtenus avec 60 situations labellisées dans la base d'entrainement et 30 époques d'entrainement, soit un temps d'entrainement d'une quinzaine de secondes. L'élaboration d'une base d'entrainement étant une tâche fastidieuse, c'est un avantage décisif que l'algorithme selon l'invention puisse être entrainé efficacement avec un petit nombre de données.

La solution proposée permet de prendre en compte des connaissances métier dans un apprentissage automatique, au travers de l'analyse d'une base de connaissances existante.

L'adaptation de l'algorithme d'aide à toute modification de la base de connaissance initiale est aisée. Il y a donc une dimension dynamique à la présente solution.

L'aspect symbolique induit une dimension sémantique permettant de donner du sens aux résultats obtenus. Cette explicabilité ou interprétabilité des résultat permet d'aider à la certification de la solution développée.

L'invention peut être utilisée dans d'autres environnements que celui de l'avionique civil ou militaire : contrôle de voiture autonome, gestion des services des senseurs dans la surveillance aéroportée, distribution des ressources, informatique en périphérie de réseau...

## Revendications

1. Procédé (100) de génération automatique d'un algorithme (230) d'aide à une prise de décision par un opérateur dans un environnement complexe et dynamique, **caractérisé en ce que** le procédé comporte les étapes de :
- fournir (110) une base de connaissances comportant une pluralité de règles logiques, une règle logique étant une fonction logique associant une connaissance à une ou plusieurs variables d'entrée, une variable d'entrée étant une donnée physique et/ou une connaissance intermédiaire ;
- analyser (120) la base de connaissances pour extraire un ensemble de connaissances et un ensemble de données physiques ;
- élaborer (130) un algorithme du type réseau de tenseurs logiques comportant un réseaux de neurones pour chaque connaissance de l'ensemble de connaissances et un réseau de neurones pour chaque donnée physique de l'ensemble de données physiques, un réseau de neurones calculant une pertinence de la connaissance ou de la donnée physique associée à partir d'une situation courante, la situation courante étant définie par les valeurs courantes de chacune des données physiques de l'ensemble de données physiques ;
- entrainer (140) l'algorithme du type réseau de tenseurs logiques sur une base de données d'apprentissage comportant des situations annotées avec la pertinence vraie de chaque connaissance et de chaque donnée physique, pour obtenir l'algorithme d'aide à une prise de décision ; et,
- exécuter (150) l'algorithme d'aide à une prise de décision sur une nouvelle situation pour calculer les pertinences de chaque connaissance et de chaque donnée physique vis-à-vis de la nouvelle situation.

2. Procédé selon la revendication 1, dans lequel analyser (120) la base de connaissances permet d'extraire, pour chaque connaissance de l'ensemble de connaissances, un ensemble de causes de ladite connaissance, qui est constitué des données physiques qui sont les causes directes ou indirectes de ladite connaissance, et dans lequel l'entrainement de l'algorithme du type réseau de tenseurs logiques s'effectue en mettant en oeuvre une contrainte fondée sur l'ensemble des causes de chaque connaissance.

3. Procédé selon la revendication 2, dans lequel l'entrainement de l'algorithme du type réseau de tenseurs logiques s'effectue en minimisant une valeur de vérité globale résultant d'une agrégation d'une pluralité de valeurs de vérité élémentaires, la pluralité de valeurs de vérité élémentaires comporte :
- au moins la pertinence d'une donnée physique pour toute situation s telle que ladite donnée physique est annotée comme pertinente ;
- au moins la pertinence d'une donnée physique pour toute situation telle que ladite donnée physique est annotée comme n'étant pas pertinente ; et,
- pour chaque connaissance, au moins une différence entre la pertinence de ladite connaissance et la disjonction logique des pertinences de toutes les causes de ladite connaissance.

4. Procédé selon l'une quelconque des revendications précédentes, dans lequel l'environnement est celui d'un aéronef et l'opérateur le pilote dudit aéronef.

5. Procédé selon l'une quelconque des revendications précédentes, dans lequel, suite à l'exécution de l'algorithme d'aide à une prise de décision sur la nouvelle situation, le procédé comporte une étape consistant à présenter à l'opérateur une liste de connaissances et/ou de données filtrée et/ou ordonnées en fonction de leurs pertinences respectives.

6. Produit programme d'ordinateur comportant des instructions logicielles qui, lorsqu'elles sont exécutées par un dispositif informatique, mettent en oeuvre l'algorithme d'aide à une prise de décision résultant du procédé de génération selon l'une quelconque des revendications précédentes.

7. Dispositif informatique (200) d'aide à une prise de décision configuré de manière à exécuter l'algorithme (230) d'aide à une prise de décision résultant du procédé de génération selon l'une quelconque des revendications 1 à 5.
